# EUROPEAN PATENT APPLICATION

(11) **EP 0 664 448 A2**
(43) Date of publication of application: **26.07.1995**
(21) Application number: 95103363.8
(22) Date of filing: 20.06.1989
(51) Int. Cl.: G01N 27/00

(54) **Tunnel unit and scanning head for scanning tunneling microscope**

(30) Priority: 13.12.1988 JP 312825/88; 13.03.1989 JP 57809/89
(62) Divisional of application: 89306245.5
(71) Applicant: MITSUBISHI DENKI KABUSHIKI KAISHA, Tokyo (JP)
(72) Inventor: Nishioka, Tadashi, c/o LSI Kenkyusho, Itami City, Hyogo Prefecture (JP); Yasue, Takao, c/o LSI Kenkyusho, Itami City, Hyogo Prefecture (JP); Koyama, Hiroshi, c/o LSI Kenkyusho, Itami City, Hyogo Prefecture (JP)
(74) Representative: Mounteney, Simon James

(57) **Abstract**

A scanning head for a scanning tunneling microscope comprising:
a scanning head main body having an opening formed therein for observation;
a piezoelectric element fixed to said scanning head main body and disposed inside said scanning head main body;
a probe mounted on said piezoelectric element and disposed in the vicinity of said opening of said scanning head main body; and
an observation window body provided in said opening of said scanning head main body in such a manner as to close said opening, said observation window body being optically transparent and capable of preventing the inside of said scanning main body from being subjected to external disturbance.

## Description

### BACKGROUND OF THE INVENTION

### FIELD OF THE INVENTION

The present invention relates to a tunnel unit for a scanning tunneling microscope (hereinafter referred to as an "STM") and, more particularly, to a tunnel unit for a microscope of this type that has a coarse adjustment mechanism in which the scanning head is supported by the use of screws at three points.

The present invention also relates to a scanning head used in a tunnel unit for an STM.

### DESCRIPTION OF THE RELATED ART

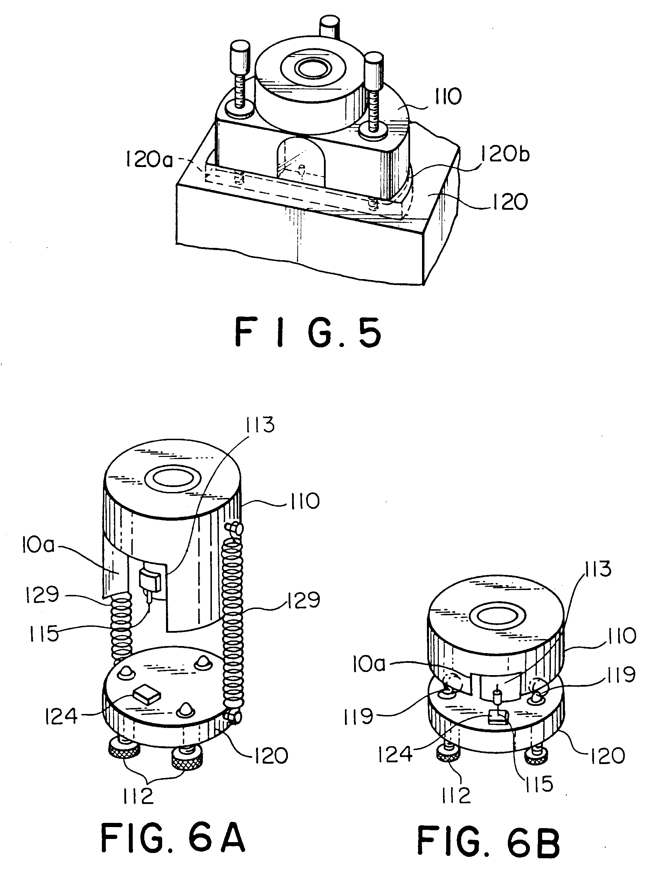

Tunnel units for STMs that have a coarse adjustment mechanism, in which a scanning head having a probe mounted on a piezoelectric element is supported at three points by three screws provided through a specimen stage, are disclosed in, for instance, (1) J. Schneir, R. Sonnenfeld, O. Marti, P. K. Hansma, J. E. Demuth and R. J. Hamers, "J. Appl. Phys.", Vol. 63, No. 3, pp 717 to 721, 1988, and (2) O. Marti, B. Drake, S. Gould and P. K. Hansma, "J. Vac. Sci. Technol. A.", Vol. 6, No. 2, pp 287 to 290, 1988. Tunnel units according to these disclosures are shown in Figs. 6A and 6B. As shown in these figures, each tunnel unit has a scanning head 110 and a specimen stage 120. The scanning head 110 is provided with a piezoelectric element 113 capable of serving as a fine adjustment mechanism, and a probe 115 mounted on the piezoelectric element 113. On the other hand, the specimen stage 120 is provided with three screws 112 whose ends project from the surface of the stage 120 on which specimens, such as a specimen 124, may be placed. The scanning head 110 is disposed upon the ends of the three screws 112. When the screws 112 are advanced or retracted by suitably rotating them, the space between the probe 115 provided on the scanning head 110 and the specimen 124 placed on the specimen stage 120 is adjusted. An opening 10a for observing the probe 115 is formed through a side portion of the scanning head 110. The adjustment of the space between the probe 115 and the specimen 124 is performed while the tip portion of the probe 115 is observed through the opening 10a and at a magnified scale achieved by using a magnifier.

However, the rigidity of the tunnel unit is inadequate if the scanning head 110 is simply disposed upon the three screws 112. To overcome this problem, the tunnel unit has, e.g., the following arrangement. That is, springs 129 are provided between the scanning head 110 and the specimen stage 120 to apply tensile force between these members, as shown in Fig. 6A, or spherical permanent magnets 119 are mounted on the ends of the screws 112 and, simultaneously, the scanning head 110 is formed of a magnetic body, as shown in Fig. 6B, thereby causing attraction by virtue of the magnetic force.

The conventional tunnel units, however, encounter the following problems.

In a tunnel unit in which the springs 129 are used to pull the scanning head 110 and the specimen stage 120 toward each other, the springs 129, which must be disassembled and reassembled each time the probe 115, the specimen 124 or the like is replaced, lead to inconvenience. Particularly when springs 129 having a large spring constant are used or when a plurality of springs 129 are used in order to enhance the rigidity of the tunnel unit, the disassembly and reassembly of the springs 129 may cause the scanning head 110 to become inclined or subjected to impact, often resulting in the probe 115 coming into contact with the specimen stage 120, the specimen 124, or other associated parts, thereby damaging the probe 115, the specimen 124, or the like.

Furthermore, a tunnel unit in which the spherical permanent magnets 119 are used involves the risk that, when the scanning head 110 is being disposed on the specimen stage 120, these members may be abruptly attracted to each other by the magnetic force such as to damage the probe 115, the specimen 124, or the like. Also, because permanent magnet materials having a large coercive force, such as Alnico and ferrite, are in general hard and brittle, they can only be machined with difficulty. It is therefore difficult to machine such a material to assume a spherical configuration and, hence, to provide it with a low level of surface roughness at least at the part where it is to come into contact with the scanning head 110. Another problem is that, if a sintered magnet material is used, voids or cavities tend to be formed in the spherical surface after surface machining, while if permanent magnets in which a plastic material is charged with needle-shaped particles of an iron-cobalt alloy are used, they may encounter such problems as surface wear, a low level of rigidity, and a large coefficient of thermal expansion.

The formation of the opening 10a in the scanning head 110 involves the following problem. If any sound waves should propagate from the outside of the tunnel unit into the scanning head 110 through the opening 10a, they may directly propagate to the piezoelectric element 113. In such cases, there is a risk of electric noise being generated. An STM of the type being discussed employs tunnel current which is about 1 nA and is thus very small relative to the bias voltage applied between the probe 115 and the specimen 124, which is about 20 mV. Therefore, if any electromagnetic waves should propagate from the outside into the scanning head 110 through the opening 10a, there is a risk of a great deal of electric noise being generated. Possible causes of electromagnetic waves entering the scanning head 110 include high voltage applied to the deflection electrode of a CRT combined with the STM to display, using the tunnel current, images of the surface of the specimen 124 for observation thereof. In order to prevent any sound waves or electromagnetic waves from entering, observation has hitherto been conducted, with the scanning head 110 covered with a case formed of a plastic or metal material. However, if the specimen 124 has to be observed while such a case is covering the scanning head 110, the efficiency of an observation operation deteriorates greatly.

### SUMMARY OF THE INVENTION

An object of the present invention is to provide a scanning head for a scanning tunneling microscope which is capable of reducing the possibility of electric noise being generated, and of ensuring an operation of excellent efficiency.

A scanning head for a scanning tunneling microscope according to the present invention comprises: a scanning head main body having an opening formed therein for observation; a piezoelectric element fixed to the scanning head main body and disposed inside the scanning head main body; a probe mounted on the piezoelectric element and disposed in the vicinity of the opening of the scanning head main body; and an observation window body provided in the opening of the scanning head main body in such a manner as to close the opening, the observation window body being optically transparent and capable of preventing the inside of the scanning main body from being subjected to external disturbance.

### BRIEF DESCRIPTION OF THE DRAWINGS

Fig. 1A is a perspective view of a tunnel unit for an STM; in accordance with a first embodiment of the present invention;
Fig. 1B is a sectional view taken along the line VII-VII shown in Fig. IA;
Fig. 2A is a perspective view showing essential parts of a second embodiment;
Fig. 2B is a sectional view taken along the line VIII-VIII shown in Fig 2A;
Figs. 2C to 2H are views showing various modifications of the eleventh embodiment, Figs. 2D, 2F and 2H being sectional views respectively taken along the line IX-IX shown in Fig. 2C, the line X-X shown in Fig. 2E, and the line XI-XI shown in Fig. 2G;
Fig. 3A is a perspective view showing essential parts of a third embodiment;
Fig. 3B is a sectional view taken along the line XII-XII shown in Fig. 3A;
Figs. 3C to 3F are views showing various modifications of the twelfth embodiment, Figs. 3D and 3F being sectional views respectively taken along the line XIII-XIII shown in Fig. 3C, and the line XIV-XIV shown in Fig. 3E;
Fig. 4A is a perspective view showing essential parts of a fourth embodiment;
Fig. 4B is a sectional view taken along the line XV-XV shown in Fig. 4A;
Fig. 4C is a perspective view showing a modification of the fourth embodiment;
Fig. 4D is a sectional view taken along the line XVI-XVI shown in Fig. 4C;
Fig. 5 is a perspective view showing a fifth embodiment; and
Figs. 6A and 6B are perspective views of conventional tunnel units.

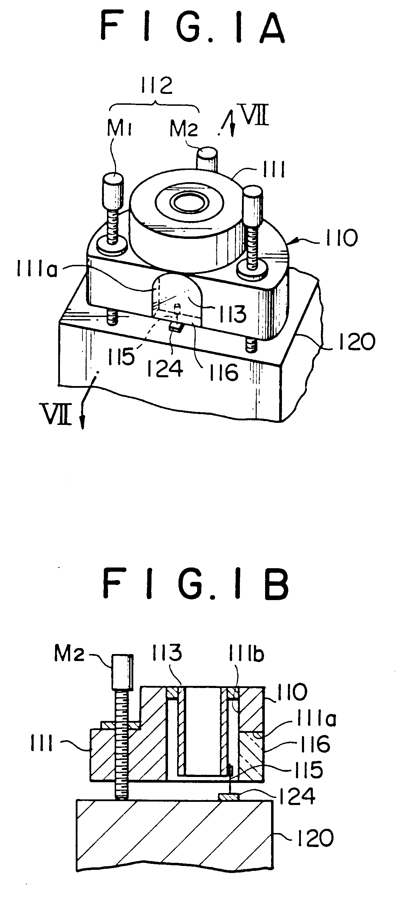

An embodiment of the present invention is shown in Figs. 1A and 1B. In this embodiment, an observation window body 116 is provided in an opening 111a of a scanning head main body 111 of a scanning head 110 in such a manner as to close the opening 111a. The opening 111a is located on one side of the scanning head main body 111 and in front of a probe 115. The configuration of the opening 111a is, for instance, horseshoe-shaped and defined by a semicircular arc having a radius of 6 mm and two straight lines continuing from the semicircular arc and having a length of 2 mm, and has, for instance, a depth of 7 mm. If, as in the case of the second embodiment, a piezoelectric element 113 having an outer diameter of 12 mm is used, and simultaneously if a through hole 111b of the scanning head main body 111 in which the piezoelectric element 113 is inserted has a diameter of 18 mm, the distance from the outermost end of the opening 111a to the tip of the probe 115 is approximately 10 mm.

The observation window body 116 is formed of a material which is optically transparent and has a sound insulating property, such as boro-silicate crown glass, molten quartz glass, or synthetic quartz glass. If the scanning head 110 is to be used in a certain type of environment where the scanning head 110 will be subjected to relatively little external noise, a plastic material such as acrylic diglycol carbonate may be used. The observation window body 116 is formed with the same configuration as the opening 111a, and is fixed within the opening 111a by employing either a tight-fitting method or an adhesive. If the opening 111a has a configuration of certain type, threads may be formed in the outer periphery of the observation window body 116 and the inner periphery of the opening 111a in such a manner as to allow mutual engagement of these threads.

By virtue of the provision of the observation window body 116 in the opening 111a, it is possible to prevent any sound waves from propagating from the outside into the scanning head main body 111 through the opening 111a and, hence, to prevent them from disturbing the probe 115 and the ambient atmosphere. Thus, according to this embodiment, the scanning head 110 is capable of reducing the possibility of electric noise being generated. Further, since the scanning head 110 does not have to be covered with a sound wave insulating case, the efficiency of an observation operation is enhanced.

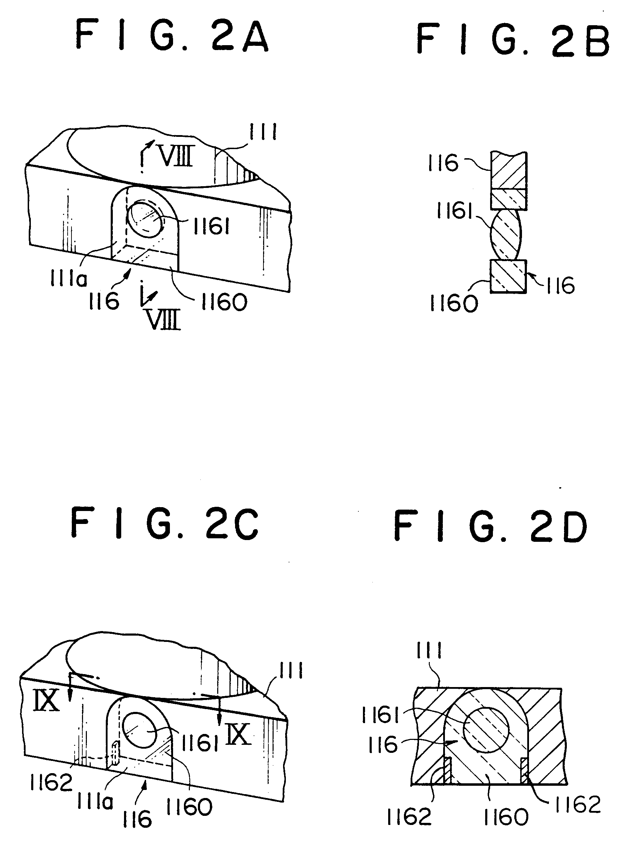

A second embodiment of the present invention is shown in Figs. 2A and 2B. In this embodiment, an observation window body 116 comprises a window main body 1160 and a magnifying lens 1161 provided in the center of the window main body 1160. An example which may be used as the magnifying lens 1161 is a single spherical lens having a focal length which is substantially equal to the distance between the principal plane of the magnifying lens 1161 and the tip of the probe 115, and also having a maximum possible outer diameter that can be received within the opening 111a. The magnifying lens 1161 may be disposed with its optical axis extending perpendicular to the Z-direction of the piezoelectric element 113. Alternatively, the magnifying lens 1161 may be disposed obliquely so as to facilitate the observation of the tip of the probe 115 and the specimen 124. If threads are formed in the outer periphery of the magnifying lens 1161 and the inner periphery of a through hole formed in the window main body 1160 to fit the magnifying lens 1161 therein, and in such a manner as to allow mutual engagement of these threads, the depth with which the magnifying lens 1161 is mounted on the window main body 1160 can be easily varied, thereby enabling the adjustment of the focal point of the magnifying lens 1161. In this embodiment, by virtue of the arrangement in which the observation window body 116 has the magnifying lens 1161, the observation of the tip of the probe 115 and the specimen 124 is facilitated, and, furthermore, there is no need to prepare a separate magnifier in addition to the scanning head 110. An alternative arrangement may be adopted in which no window main body 1160 is used and a magnifying lens 1161 alone is mounted on the scanning head main body 111 to serve as an observation window body 116.

If the material used to form the scanning head main body 111 is a magnetic substance such as Invar or super-Invar, permanent magnets 1162 may be impregnated in outer peripheral portions of the window main body 1160, as shown in Figs. 2C and 2D. With this arrangement, the observation window body 116 is fixed within the opening 111a by utilizing the magnetic force of the permanent magnets 1162. Magnets having a large coercive force, e,g., magnets of rare earth elements should preferably be used as the permanent magnets 1162. With this arrangement, the assembly and disassembly of the observation window body 116 onto and from the scanning head main body 111 can be greatly facilitated. Furthermore, the position of the focal point of the magnifying lens 1161 can be easily varied by varying the depth with which the observation window body 116 is positioned within the opening 111a. This is advantageous in that, even when the position of the probe 115 or the specimen 124 has become slightly deviated during replacement, if the depth with which the observation window body 116 is positioned within the opening 111a is suitably adjusted, the tip of the probe 115 and the specimen 124 can be observed clearly.

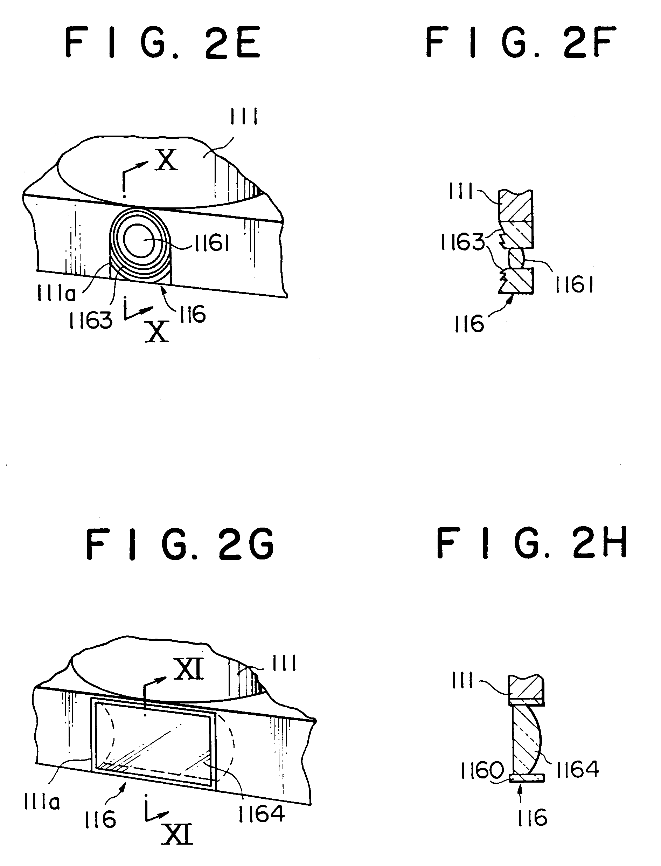

Still alternatively, a condenser lens 1163 may be formed in a portion of the window main body 1160 which is in the periphery of the magnifying lens 1161, as shown in Figs. 2E and 2F. The condenser lens 1163 may be, for instance, a Fresnel lens, and in this case, the magnifying lens 1161 is provided in the center of the Fresnel lens. With this arrangement, light from the outside of the scanning head 110 is converged by the condenser lens 1163 to be brightly shone on the tip of the probe 115 and the specimen 124, thereby facilitating observation.

Alternatively, as shown in Figs. 2G and 2H, a cylindrical lens 1164 may be mounted within the opening 111a, instead of the single spherical lens 1161. With this arrangement, the field of view provided is wider than that provided by the single spherical lens 1161, thereby further facilitating the observation of the tip of the probe 115, etc.

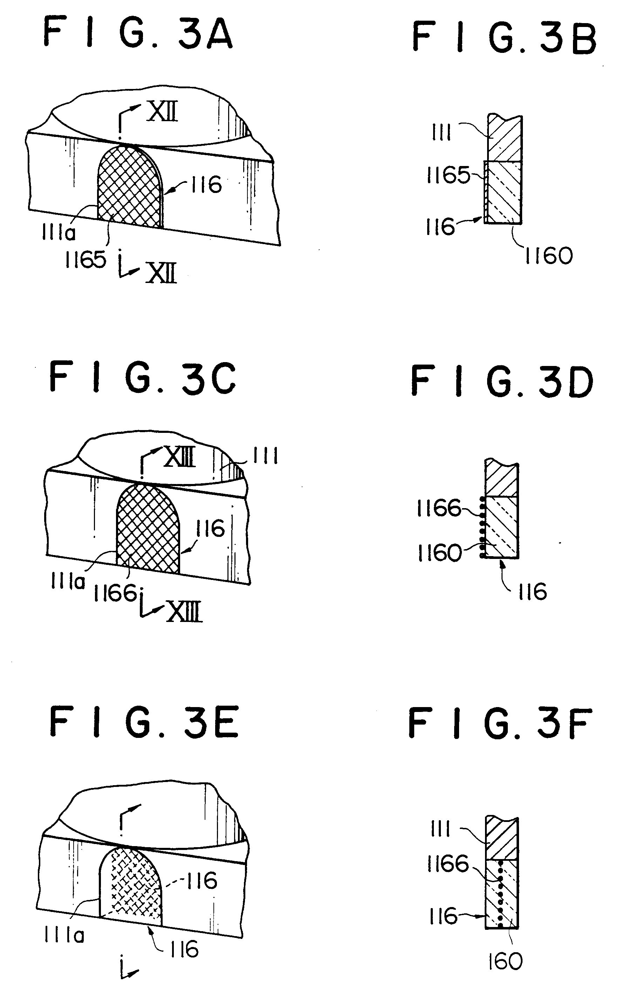

A third embodiment of the present invention is shown in Figs. 3A and 3B. In this embodiment, an observation window body 116 has a window main body 1160 and an electromagnetic wave insulating shield 1165 formed on one surface of the window main body 1160. An example which may be used as the electromagnetic wave insulating shield 1165 is an electroconductive film such as the so-called ITO film formed of an oxide of indium and tin. Such a film is formed as the shield 1165 by coating it on the surface of the window main body 1160. The electromagnetic wave insulating shield 1165 is electrically connected, at its outer peripheral portion, to the scanning head main body 111 formed of a metal material, so as to shut out electromagnetic waves propagating inwardly from the outside. An example of a method of electrically connecting the electromagnetic wave insulating shield 1165 and the scanning head 111 is a method in which an electroconductive adhesive is applied to the interface between these members. Alternatively, electrical connection between the electromagnetic wave insulating shield 1165 and the scanning head main body 111 may be provided by using a metal frame which is in contact with the shield 1165 is mechanically fixed to the side portions of the observation window body 116 and is kept in contact with the inner periphery of the opening 111a. With the arrangement of this embodiment, since it is possible to shut out not only sound waves but also electromagnetic waves, the scanning head 110 is capable of achieving a further reduction in the possibility of electric noise generation.

Alternatively, as shown in Figs. 3C and 3D, instead of using the electromagnetic wave insulating shield 1165 coated on the surface of the window main body 1160, an electromagnetic wave insulating shield 1166 which is formed of meshes of an electroconductive material may be bonded to the surface of the window main body 1160. Still alternatively, an arrangement such as that shown in Figs. 3E and 3F may be adopted in which the window main body 1160 is formed of a plastic material such as a polycarbonate or acrylic material, and the electromagnetic wave insulating shield 1166 is impregnated within this window main body 1160.

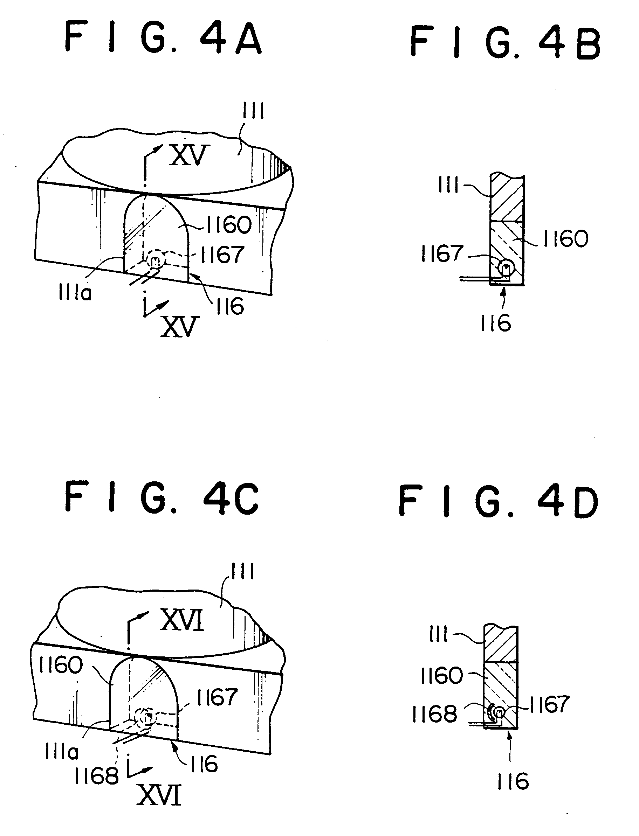

A fourth embodiment of the present invention is shown in Figs. 4A and 4B. In this embodiment, an illuminating lamp 1167 is impregnated in a window main body 1160. The illuminating lamp 1167 is disposed at a position with which the observation of the probe 115 and the specimen 124 is not hindered. Since light radiated from the illuminating lamp 1167 provides brightness, this facilitates the observation of the probe 115 and the specimen 124. Although the illuminating lamp 1167 shown in Fig. 4B is impregnated within the window main body 1160, the lamp 1167 may alternatively be mounted on the surface of the window main body 1160, or be provided in such a manner that only a portion of the lamp 1167 is impregnated within the window main body 1160, with the remaining portion being exposed on the out side of the window main body 1160. Still alternatively, as shown in Figs. 4C and 4D, a mirror 1168 may provided in the vicinity of the illuminating lamp 1167. With this arrangement, light from the illuminating lamp 1167 is reflected by the mirror 1168 to be shone on the probe 115 and the specimen 124, thereby achieving an increased brightness in the portion to be observed. A preferable example of the mirror 1168 is a mirror having a light-converging characteristic, such as a concave mirror.

A fifth embodiment of the present invention is shown in Fig. 5 . In this embodiment, a specimen stage 120 has a recess 120b formed in the specimen placing surface 120a thereof, and a scanning head 110 is disposed in this recess 120b. The bottom face of the scanning head main body 111 is received within the recess 120b. With this arrangement, it is possible to prevent a risk that sound waves or electromagnetic waves propagating inwardly from the outside may directly propagate to the associated probe 115 passing through the gap between the bottom face of the scanning head main body 111 and the specimen placing surface 120a of the specimen stage 120. Thus, it is possible to further enhance the effect of insulating sound waves and electromagnetic waves.

## Claims

1. A scanning head for a scanning tunneling microscope comprising:
a scanning head main body having an opening formed therein for observation;
a piezoelectric element fixed to said scanning head main body and disposed inside said scanning head main body;
a probe mounted on said piezoelectric element and disposed in the vicinity of said opening of said scanning head main body; and
an observation window body provided in said opening of said scanning head main body in such a manner as to close said opening, said observation window body being optically transparent and capable of preventing the inside of said scanning main body from being subjected to external disturbance.

2. A scanning head according to claim 1, wherein said observation window body is capable of shutting out sound waves propagating inwardly from the exterior.

3. A scanning head according to claim 36, wherein said observation window body has a magnifying lens.

4. A scanning head according to claim 36, wherein said observation window body has a magnifying lens and a condenser lens provided on the outer periphery of said magnifying lens.

5. A scanning head according to claim 36, further comprising a magnet fixed to the outer periphery of said observation window body and allowing said observation window body to be held within said opening.

6. A scanning head according to claim 35, wherein said observation window body is capable of shutting out electromagnetic waves propagating inwardly from the exterior.

7. A scanning head according to claim 40, wherein said observation window body has a window main body and a shield provided on said window main body for insulating electromagnetic waves.

8. A scanning head according to claim 35, wherein said observation window body has a window main body and an illuminating lamp fixed to said window main body.
